# EUROPEAN PATENT APPLICATION

(11) **EP 4 806 766 A1**
(43) Date of publication of application: **16.09.2026**
(21) Application number: 25205799.7
(22) Date of filing: 30.09.2025
(51) Int. Cl.: B62D 25/20

(54) **REAR FLOOR STRUCTURE OF VEHICLE, AND VEHICLE**

(30) Priority: 12.03.2025 CN 202510294630
(71) Applicant: Xiaomi EV Technology Co., Ltd., Beijing 100176 (CN)
(72) Inventor: DAI, Tailiang, Beijing, 100176 (CN); JIANG, Daxiu, Beijing, 100176 (CN); LIAO, Pingwei, Beijing, 100176 (CN); QIU, Peng, Beijing, 100176 (CN); ZENG, Rong, Beijing, 100176 (CN)
(74) Representative: Stöckeler, Ferdinand

(57) **Abstract**

The present invention relates to a rear floor structure of a vehicle, and a vehicle. The rear floor structure of a vehicle includes a frame (1) and a seat rail (2), where the frame (1) includes rear longitudinal beam (11), the seat rail (2) includes first rail member (21), the first rail member (21) is connected to a top of the rear longitudinal beam (11), where both the first rail member (21) and each rear longitudinal beam (11) extend in a front-rear direction of the vehicle, a projection of each first rail member (21) in a height direction of the vehicle at least partially overlaps a projection of the rear longitudinal beam (11) in a height direction of the vehicle, and the first rail member (21) is connected to the rear longitudinal beam (11) through a fastener, to strengthen the rear longitudinal beam (11) to resist a rear collision load.

## Description

### TECHNICAL FIELD

The present invention relates to the technical field of vehicle manufacturing, and in particular to a rear floor structure of a vehicle, and a vehicle.

### BACKGROUND OF THE INVENTION

The rear collision performance of vehicles in the related art is still far from satisfactory. When a high-speed rear collision occurs, the safety of rear passengers cannot be effectively guaranteed.

### SUMMARY OF THE INVENTION

An objective of the present invention is to provide a rear floor structure of a vehicle, and a vehicle, to solve the technical problem in the related art.

In order to achieve the above objective, an aspect of the present invention provides a rear floor structure of a vehicle. The rear floor structure of a vehicle includes:

a frame, including a rear longitudinal beam; and

a seat rail, including a first rail member, the first rail member is connected to a top of the rear longitudinal beam,

both the first rail member and the rear longitudinal beam extend in a front-rear direction of the vehicle, a projection of the first rail member in a height direction of the vehicle at least partially overlaps a projection of the rear longitudinal beam in the height direction of the vehicle, and the first rail member is connected to the rear longitudinal beam through a fastener, to strengthen the rear longitudinal beam to resist a rear collision load.

Optionally, the rear floor structure of a vehicle further includes a rear subframe, the height direction of the vehicle, the rear subframe is below the frame, and the seat rail is above the frame; and

in the front-rear direction of the vehicle, a tail end of the rear longitudinal beam extends beyond a tail end of the first rail member, and a tail end of the first rail member extends beyond a tail end of the rear subframe.

Optionally, a first reinforcing member is arranged on the rear longitudinal beam, both the first rail members and the rear subframe are connected to the first reinforcing member, and the first reinforcing member is between the first rail member and the rear subframe in the height direction of the vehicle.

Optionally, the fastener includes a first fastener and a second fastener;
a top of the first reinforcing member is provided with a first connecting hole, and the first rail member is connected to the first connecting hole through the first fastener; and
a mounting groove extending in the height direction of the vehicle is provided in a side wall of the first reinforcing member, a threaded sleeve is fixedly arranged in the mounting groove, and the rear subframe is connected to the threaded sleeve through the second fastener.

Optionally, an axis of the first fastener and an axis of the second fastener extend in the height direction of the vehicle, and the axis of the first fastener coincides with or deviates from the axis of the second fastener.

Optionally, the rear floor structure of a vehicle further includes a fuel tank, the fuel tank is connected to the frame, and the fuel tank is in front of the rear subframe in the front-rear direction of the vehicle.

Optionally, the frame further includes a rear transverse beam, two rear longitudinal beams are provided, the two rear longitudinal beams are spaced and arranged in parallel, and two ends of the rear transverse beam are connected to the two rear longitudinal beams respectively; and
the seat rail further includes a second rail member, the second rail member is connected to the rear transverse beam, and the rear transverse beam extends in a width direction of the vehicle.

Optionally, the second rail member extends in the front-rear direction of the vehicle, and the first rail member and the second rail member are spaced and arranged in parallel in the width direction of the vehicle; and
in the front-rear direction of the vehicle, a length of the first rail member is greater than a length of the second rail member.

Optionally, two first rail members are provided, and the first rail member corresponds to the rear longitudinal beam one by one; and
two second rail members are provided, the two second rail members are spaced and arranged in parallel, the two second rail members are located between the two first rail members in the width direction of the vehicle, a plurality of rear transverse beams are provided, and the first rail member, the second rail member and the rear transverse beam form a grid-like structure.

Optionally, a joint between the second rail member and the rear transverse beam is a second connecting point, a second reinforcing member is arranged on the rear transverse beam, and the second connecting point is connected to the second reinforcing member.

Optionally, a joint between the first rail member and the rear longitudinal beam is a first connecting point, and a joint between the second rail member and the rear transverse beam is a second connecting point; and
a plurality of first connecting points and a plurality of second connecting points are provided, the plurality of first connecting points are spaced in the front-rear direction of the vehicle, and the plurality of second connecting points are spaced in the width direction of the vehicle.

Optionally, four rear transverse beams are provided, and the rear transverse beam, the first rail member, the rear longitudinal beam and the second rail member together form a vehicle body structure in a "3x3" grid pattern to improve torsional strength of the vehicle.

Optionally, the second rail member extends in the front-rear direction of the vehicle, and in the front-rear direction of the vehicle, a tail end of each second rail member does not extend beyond a tail end of the rear transverse beam near a rear end of the vehicle.

Optionally, the frame further includes a rear anti-collision beam, the rear anti-collision beam is connected to rear ends of the rear longitudinal beam in the front-rear direction of the vehicle, and the rear anti-collision beam, the rear longitudinal beam and the rear transverse beam form a rear independent grid of the vehicle.

A second aspect of the present invention further provides a vehicle. The vehicle includes the above rear floor structure of a vehicle.

Optionally, the vehicle further includes a battery pack. The battery pack is connected to a portion of the frame of the rear floor structure of a vehicle.

According to the technical solution, the first rail member is connected to the rear longitudinal beam, such that the first rail member and the rear longitudinal beam support each other, mutual structural strength is increased, and structural strength of the first rail member and the rear longitudinal beam is increased. Moreover, the first rail member and the rear longitudinal beam extend in the front-rear direction of the vehicle and are at least partially stacked vertically, such that the first rail member and the rear longitudinal beam are combined together. The first rail member and the rear longitudinal beam can be stressed together. In a case where a rear collision of the vehicle occurs, an acting force generated by the collision can be transmitted to the rear longitudinal beam and the first rail member. A support effect can be produced by the rear longitudinal beam and the first rail member jointly, and the structural strength is improved. Accordingly, an intrusion of the rear collision is reduced. A third row of seats are protected, and safety of a third row of passengers is guaranteed. Rear collision performance of the vehicle is improved.

Other features and advantages of the present invention will be described in detail in the following detailed implementations.

### BRIEF DESCRIPTION OF DRAWINGS

The accompanying drawings provide further understanding of the present invention as a constituent part of the description, illustrate the present invention with the following detailed implementations, but do not limit the present invention. In the figures:
FIG. 1 is a schematic structural diagram illustrating an assembly relationship between a frame and a seat rail of a rear floor structure of a vehicle according to an implementation of the present invention;
FIG. 2 is a schematic structural diagram illustrating an assembly relationship between a frame and a rear subframe of a rear floor structure of a vehicle according to an implementation of the present invention;
FIG. 3 is a schematic diagram of a partial structure of a rear floor structure of a vehicle according to an implementation of the present invention;
FIG. 4 is a sectional view of section A-A of FIG. 3 according to an implementation of the present invention;
FIG. 5 is a schematic structural diagram illustrating an assembly relationship between a first reinforcing member and a first rail member according to an implementation of the present invention; and
FIG. 6 is a schematic structural diagram illustrating assembly relationships between a vehicle rear floor structure and a fuel tank as well as a battery pack according to an implementation of the present invention.

### DETAILED DESCRIPTION OF THE INVENTION

Specific embodiments of the present invention are described in detail below in combination with the drawings. It should be understood that the specific embodiments described here are merely used to describe and explain the present invention and are not intended to limit the present invention.

In the present invention, unless otherwise stated, orientation words used such as "up" and "down" are usually defined by the direction of the drawings, and "inside" and "outside" refers to the inside and outside of an associated component. Moreover, the terms "first," "second," etc. are merely used for distinguishing descriptions and cannot be construed as indicating or implying relative importance.

In the description of the present invention, it should be noted that the terms "arrange" and "connect" should be understood in a broad sense. For example, they can denote a fixed connection, a detachable connection, an integrated connection, a direct connection, an indirect connection via an intermediate medium, or communication inside two elements, unless otherwise explicitly specified and defined. For those of ordinary skill in the art, the specific meanings of the above terms in the present invention can be understood according to specific circumstances.

A vehicle with six/seven seats is typically equipped with a second row of seats or a third row of seats. With the increasing popularity of vehicles with six/seven seats, for vehicles with a second row of seats and a third row of seats, the third row of seats of a vehicle are very close to the rear end of the vehicle, such that demand for rear collision performance of the vehicle keeps increasing to guarantee the safety of the third row of passengers.

The rear collision performance of vehicles in the related art is still far from satisfactory. When a high-speed rear collision occurs, the safety of rear passengers cannot be effectively guaranteed. For example, in a case of a high-speed rear collision of 80 km/h-90 km/h, an intrusion into the rear end of the vehicle is large, and the third row of seats are prone to damage, thus influencing the safety of the third row of passengers.

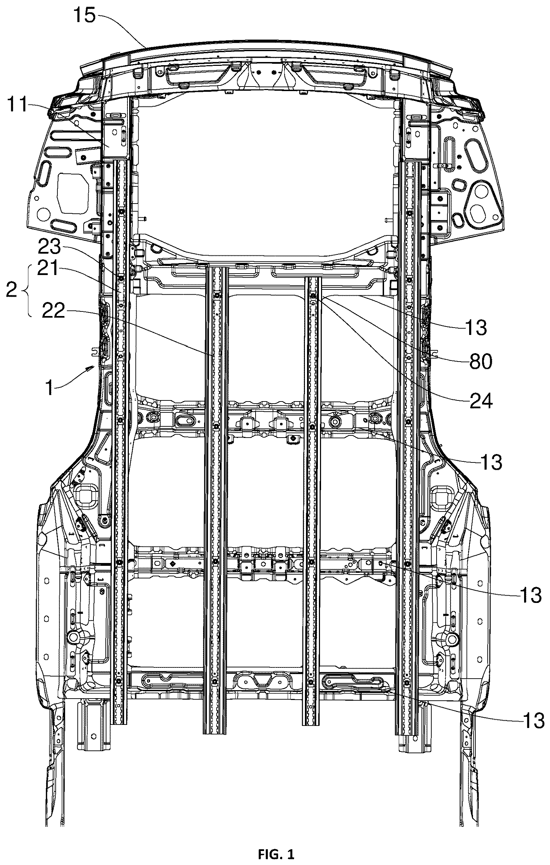

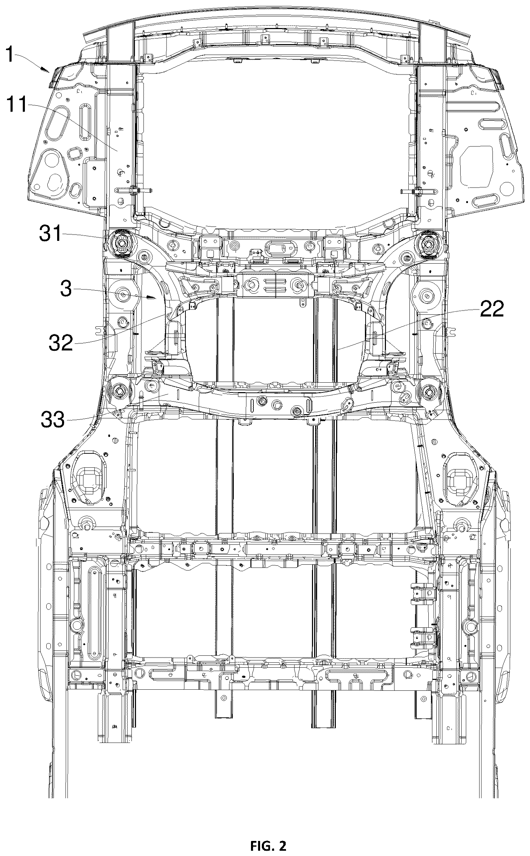

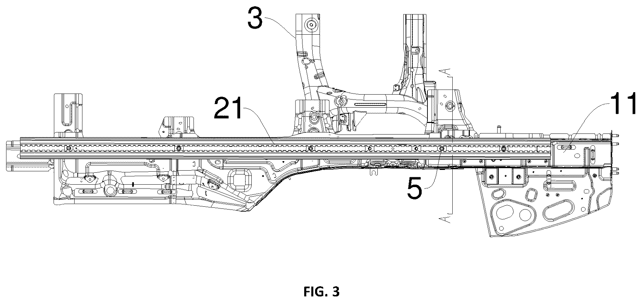

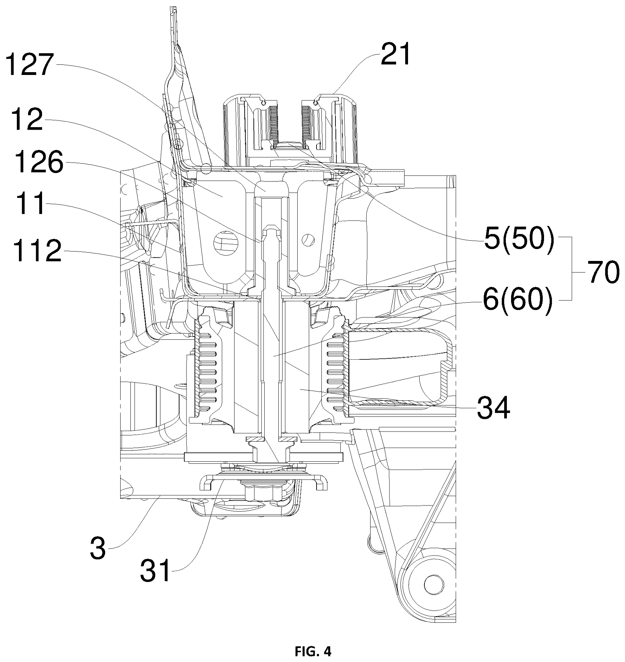

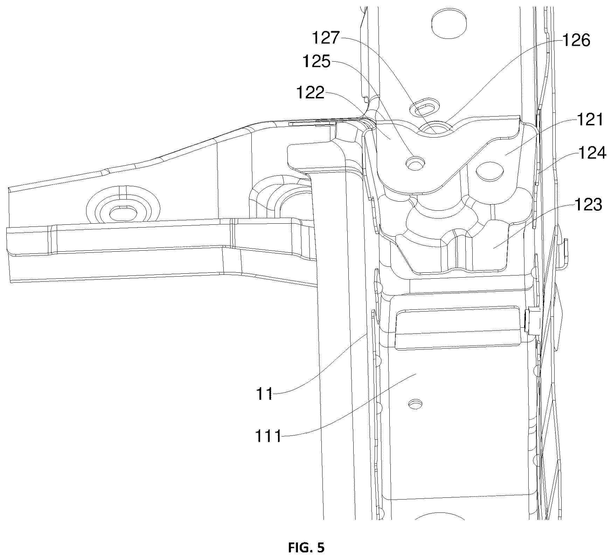

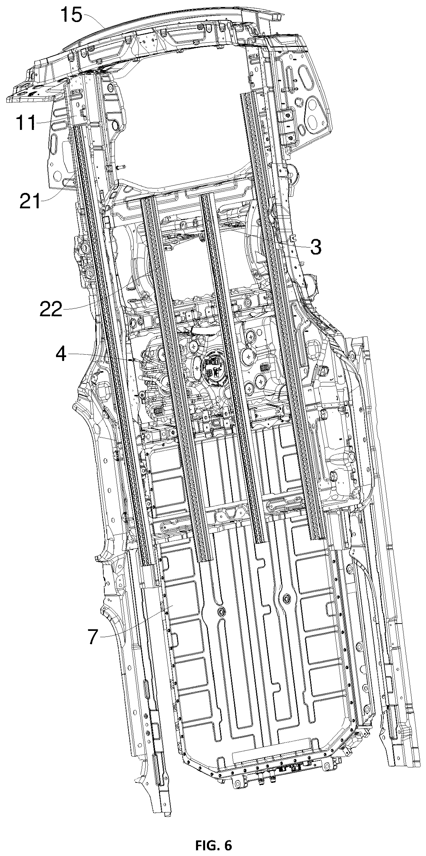

To this end, as shown in FIG. 1 to FIG. 6, an aspect of the present invention provides a rear floor structure of a vehicle. The rear floor structure of a vehicle includes a frame 1 and a seat rail 2.

The frame 1 includes a rear longitudinal beam 11.

The seat rail 2 includes a first rail member 21. The first rail member 21 is connected to a top of the rear longitudinal beam 11. The first rail member 21 is configured to guide a seat to slide, such that the seat can slide in a front-rear direction of the vehicle. A position of the seat in the front-rear direction of the vehicle can be changed.

Both the first rail member 21 and the rear longitudinal beam 11 extend in the front-rear direction of the vehicle. A projection of the first rail member 21 at least partially overlaps a projection of the rear longitudinal beam 11 in a height direction of the vehicle. The first rail member 21 is connected to the rear longitudinal beam 11 through a fastener 70, to strengthen the rear longitudinal beam 11 to resist a rear collision load.

According to the technical solution, the first rail member 21 is connected to the rear longitudinal beam 11, such that the first rail member 21 and the rear longitudinal beam 11 support each other, mutual structural strength is increased, and structural strength of the first rail member and the rear longitudinal beam is increased. Moreover, the first rail member 21 and the rear longitudinal beam 11 extend in the front-rear direction of the vehicle and are at least partially stacked vertically, such that the first rail member 21 and the rear longitudinal beam 11 are combined together. The first rail member 21 and the rear longitudinal beam 11 can be stressed together. In a case where a rear collision of the vehicle occurs, an acting force generated by the collision can be transmitted to the rear longitudinal beam 11 and the first rail member 21. A support effect can be produced by the rear longitudinal beam and the first rail member jointly, and the structural strength is improved. Accordingly, an intrusion of the rear collision is reduced. A third row of seats are protected, and safety of a third row of passengers is guaranteed. Rear collision performance of the vehicle is improved.

Optionally, in an implementation of the present invention, the rear floor structure of a vehicle further includes a rear subframe 3. In the height direction of the vehicle, the rear subframe 3 is located below the frame 1, and the seat rail 2 is located above the frame 1.

The seat rail 2, the frame 1 and the rear subframe 3 are arranged one above another. The rear subframe 3 supports the frame 1, such that the seat rail 2, the frame 1 and the rear subframe 3 support and reinforce each other, and the strength of the entire rear floor structure of the vehicle is improved.

In the front-rear direction of the vehicle, a tail end of the rear longitudinal beam 11 extends beyond a tail end of the first rail member 21, and a tail end of the first rail member 21 extends beyond a tail end of the rear subframe 3. That is, a first distance exists between the tail end of the first rail member 21 and the tail end of the rear longitudinal beam 11, and a second distance exists between the tail end of the rear subframe 3 and the tail end of the first rail member 21.

Accordingly, in the front-rear direction of the vehicle, the tail end of the rear longitudinal beam 11 is in rearmost position, followed by the tail end of the first rail member 21 and then the tail end of the rear subframe 3.

In a case where the rear collision of the vehicle occurs, a force transmission process of the collision may include three stages. In the first stage, a rear section of the rear longitudinal beam 11 mainly participates in collision deformation and force transmission. A first-stage force transmission path is formed to realize middle force transmission. In the second stage, the rear section of the rear longitudinal beam 11 and the first rail member 21 mainly participate in collision deformation and force transmission. A second-stage force transmission path is formed to realize upper and middle force transmission. In the third stage, the rear longitudinal beam 11, the first rail member 21 and the rear subframe 3 all participate in collision deformation and force transmission. A third-stage force transmission path is formed to realize upper, middle and lower force transmission. Through design of a step-by-step force transmission path, energy of a high-speed collision of the entire vehicle can be efficiently dispersed. It can be understood that in the first stage, the rear longitudinal beam 11 performs support and absorbs energy. In the second stage, the rear longitudinal beam 11 and the first rail member 21 are stressed together to perform support and disperse and absorb energy. In the third stage, the rear longitudinal beam 11, the first rail member 21 and the rear subframe 3 perform support and disperse and absorb energy together. The rear longitudinal beam 11, the first rail member 21 and the rear subframe 3 are distributed one above another, thus supporting an upper side and a lower side of the rear longitudinal beam 11, and also reducing bending of the rear longitudinal beam 11 after a collision. Accordingly, an intrusion is reduced. Safety of the entire vehicle suffering the rear collision and safety feeling of the second and third rows of passengers are improved.

Optionally, in an implementation of the present invention, the frame 1 further includes a rear anti-collision beam 15. The rear anti-collision beam 15 is connected to a rear end of the rear longitudinal beam 11 in the front-rear direction of the vehicle. The rear anti-collision beam 15 generates support to improve the rear collision performance of the vehicle. It can be understood that the rear anti-collision beam 15, as a first point of rear collision force support, generates a primary intrusion prevention function.

It should be noted that in a case where the rear collision of the vehicle occurs, in a first stage, the rear anti-collision beam 15 and a rear section of the rear longitudinal beam 11 mainly participate in collision deformation and force transmission. A first-stage force transmission path is formed to further reduce an intrusion and improve the safety of the entire vehicle suffering the rear collision.

Optionally, in an implementation of the present invention, the frame 1 further includes a rear transverse beam 13. The rear subframe 3 includes a first support arm 32 and a second support arm 33. The first support arm 32 extends in the front-rear direction of the vehicle. The second support arm 33 extends in the width direction of the vehicle. The first support arm 32 is close to the rear longitudinal beam 11. The second support arm 33 is close to the rear transverse beam 13. The second support arm 33 is located below the rear transverse beam 13 in the height direction of the vehicle.

By such an arrangement, the first support arm 32 of the rear subframe 3 and the rear longitudinal beam 11 can be stressed together. The first support arm 32 and the rear longitudinal beam 11 can support each other, such that stress of the collision is dispersed, and the structural strength is improved. It can be understood that extension directions of the first support arm 32 and the rear longitudinal beam 11 are the same, and two ends of the first support arm 32 are connected to the rear longitudinal beam 11. Thus, in a case where the rear longitudinal beam 11 is stressed, a force can be directly transmitted to the first support arm 32. The first support arm 32 and the rear longitudinal beam 11 are stressed in the same direction. Furthermore, the first rail member 21 is located above the rear longitudinal beam 11, and the first support arm 32 is located below the rear longitudinal beam 11, to structurally reinforce and support the rear longitudinal beam 11 in a vertical direction, such that the rear collision performance is improved.

Similarly, the second support arm 33 of the rear subframe 3 and the rear transverse beam 13 can be stressed together. The second support arm 33 and the rear transverse beam 13 can support each other, such that the stress of the collision is dispersed, and the structural strength is improved. It can be understood that extension directions of the second support arm 33 and the rear transverse beam 13 are the same, and two ends of the second support arm 33 are connected to the rear transverse beam 13. Thus, in a case where the rear transverse beam 13 is stressed, a force is directly transmitted to the second support arm 33. The second support arm 33 and the rear transverse beam 13 are stressed in the same direction. The rear collision performance can be improved.

Optionally, in an implementation of the present invention, the frame 1 further includes a rear transverse beam 13. Two rear longitudinal beams 11 are provided. The two rear longitudinal beams 11 are spaced and arranged in parallel. Two ends of the rear transverse beam 13 are connected to the two rear longitudinal beams 11, respectively.

The rear transverse beam 13 and the rear longitudinal beam 11 are arranged at an angle. The rear transverse beam 13 and the rear longitudinal beam 11 can support each other, thus improving the structural strength. In a case where the rear longitudinal beam 11 receives a collision force, the force can be transmitted to the rear transverse beam 13, such that the rear transverse beam 13 generates dispersion force and energy absorption effect, and the rear collision performance is improved.

The rear anti-collision beam 15, the rear longitudinal beam 11 and the rear transverse beam 13 form a rear independent grid of the vehicle, that is, form a frame structure, which can improve modal and dynamic stiffness, and further improve an ability to resist the rear collision load.

Optionally, the seat rail 2 further includes a second rail member 22. the second rail member 22 is connected to the rear transverse beam 13. The rear transverse beam 13 extends in a width direction of the vehicle.

The second rail member 22 is arranged parallel to the first rail member 21. The second rail member 22 and the rear transverse beam 13 can support each other due to cooperation between the second rail member 22 and the rear transverse beam 13. the second rail member 22 and the rear transverse beam 13 reinforce each other, such that structural strength of the rear transverse beam 13 and structural strength of the second rail member 22 can be increased. In the third stage of force transmission of the collision, the rear longitudinal beam 11, the first rail member 21 and the rear subframe 3 all participate in collision deformation and force transmission. When upper, middle and lower force transmission is implemented, the rear transverse beam 13 and the second rail member 22 can also participate in the force transmission. The rear transverse beam 13 and the second rail member 22 can implement upper and middle force transmission, further disperse the force, and implement collision energy absorption. Thus, the intrusion is further reduced. The safety of the entire vehicle suffering the rear collision and the safety feeling of the second and third rows of passengers are improved.

Moreover, a seat is connected to the first rail member 21 and the second rail member 22. The seat moves forwards and backwards under cooperation of the first rail member 21 and the second rail member 22, such that forward and backward movement of the seat is more stable.

Optionally, in an implementation of the present invention, the second rail member 22 extends in the front-rear direction of the vehicle. the first rail member 21 and the second rail member 22 are spaced and arranged in parallel in the width direction of the vehicle. A length of the first rail member 21 is greater than a length of the second rail member 22.

The first rail member 21 and the rear longitudinal beam 11 are connected together to be stressed together. In a case where the rear collision of the vehicle occurs, with a collision intrusion of the rear end of the vehicle, the first rail member 21 is subjected to a collision impact force earlier than the second rail member 22. In a case where the collision intrusion is further deepened, the second rail member 22 is subjected to the collision impact force. Such that structural strength is increased. The third row of seats and the third row of passengers are protected. The second row of seats and the second row of passengers are also protected. It can be understood that the first rail member 21 and the second rail member 22 implement collision support twice. This corresponds to that in the force transmission process of the collision, the first rail member 21 and the rear longitudinal beam 11 transmit the force together in the second stage, and the first rail member 21, the rear longitudinal beam 11, the second rail member 22, the rear transverse beam 13 and the rear subframe 3 transmit the force together in the third stage. The collision force is dispersed, and the energy is absorbed.

Optionally, in another implementation of the present invention, the first rail member 21 and the second rail member 22 extend in the front-rear direction of the vehicle. In the front-rear direction of the vehicle, a length of the first rail member 21 and a length of the second rail member 22 may be the same.

Optionally, in an implementation of the present invention, two first rail members 21 are provided. The first rail member 21 corresponds to the rear longitudinal beam 11 one by one.

Two rear longitudinal beams 11 are also provided. The two first rail members 21 correspond to the two rear longitudinal beams 11 one by one respectively. That is, one first rail member 21 corresponds to one rear longitudinal beam 11. This arrangement can improve structural strength of the two rear longitudinal beams 11, such that the two rear longitudinal beams 11 can be stressed together, and the rear collision performance of the vehicle can be improved.

Optionally, two second rail members 22 are provided. The two second rail members 22 are spaced and arranged in parallel. The two second rail members 22 are located between the two first rail members 21 in the width direction of the vehicle. A plurality of rear transverse beams 13 are provided. The first rail member 21, the second rail member 22 and the rear transverse beam 13 form a grid-like structure. It can be understood that the first rail member 21 and the second rail member 22 are parallel to the rear longitudinal beam 11. The second rail member 22 is located between the two first rail members 21. The second rail member 22 is connected to the rear transverse beam 13 at an angle. The rear transverse beam 13 is located between the two rear longitudinal beams 11. Thus, the second rail member 22 and the rear transverse beam 13 cross to form a grid-like structure, that is, a grid frame structure similar to a "3×3 grid". The grid-like structure has high stability and strong support, such that structural strength of an entire rear floor of the vehicle can be improved, and the rear collision performance of the vehicle can be increased.

Moreover, one first rail member 21 and one second rail member 22 may correspond to one seat, such that the second row of seats may be provided as separate two seats, and the two seats may be moved separately. Alternatively, the third row of seats may be provided as separate two seats, and the two seats may be moved separately.

Optionally, in an implementation of the present invention, a joint between the second rail member 22 and the rear transverse beam 13 is a second connecting point 24. A second reinforcing member 80 is arranged on the rear transverse beam 13. The second connecting point 24 is located above the second reinforcing member 80 in the height direction of the vehicle. The second connecting point 24 is connected to the second reinforcing member 80. The second reinforcing member 80 can improve the structural strength of the rear transverse beam 13 and improve the strength of the rear transverse beam 13. Moreover, the second reinforcing member 80 can reinforce the second connecting point 24, to improve connection strength between the second rail member 22 and the rear transverse beam 13.

Optionally, in an implementation of the present invention, a joint between the first rail member 21 and the rear longitudinal beam 11 is a first connecting point 23. A joint between the second rail member 22 and the rear transverse beam 13 is a second connecting point 24.

A plurality of first connecting points 23 and a plurality of second connecting points 24 are provided. The plurality of first connecting points 23 are spaced in the front-rear direction of the vehicle. The plurality of second connecting points 24 are spaced in the width direction of the vehicle. Through such an arrangement, connection strength between the first rail member 21 and the rear longitudinal beam 11 and connection strength between the second rail member 22 and the rear transverse beam 13 can be improved. Moreover, the arrangement of the plurality of first connecting points 23 and the plurality of second connecting points 24 can facilitate formation of the grid frame structure by the first rail member 21, the second rail member 22, the rear longitudinal beam 11 and the rear transverse beam 13 together. Lightweight, structural strength and support performance are also guaranteed. The intrusion of the rear collision of the vehicle is reduced. The rear collision performance is guaranteed.

Optionally, in an implementation of the present invention, a joint between the rear transverse beam 13 and the rear longitudinal beam 11 is a third connecting point. The first connecting point 23 is close to the third connecting point. By such an arrangement, assembly of the rear transverse beam 13 and the rear longitudinal beam 11, and assembly of the first rail member 21 and the rear longitudinal beam 11 can be performed together, such that convenience of an assembly operation can be improved. Furthermore, the first connecting point 23 and the third connecting point are close to each other, such that the first rail member 21 can also structurally reinforce the joints between the rear transverse beam 13 and the rear longitudinal beam 11. On the contrary, the rear transverse beam 13 can also structurally reinforce the joint between the first rail member 21 and the rear longitudinal beam 11, such that the first connecting point 23 and the third connecting point support each other, and the overall structural stability is improved.

Optionally, in an implementation of the present invention, a plurality of rear transverse beams 13 are provided. The plurality of rear transverse beams 13 are spaced in the front-rear direction of the vehicle. At least some of the first connecting points 23 correspond to a plurality of third connecting points one by one. The plurality of rear transverse beams 13 are connected to the two rear longitudinal beams 11, such that structural strength of the frame 1 can be improved. A grid frame-like structure, which is more stable, can be formed. Moreover, the plurality of rear transverse beams 13 can reinforce the joint between the first rail member 21 and the rear longitudinal beam 11.

At the joints between the plurality of rear transverse beams 13 and the rear longitudinal beam 11, that is, at the third connecting points, the first connecting points 23 are provided to achieve mutual structural support and reinforcement. Furthermore, at positions other than the third connecting points, first connecting points 23 may also be provided to connect the first rail member 21 and the rear longitudinal beam 11, which guarantee connection strength.

Optionally, the second rail member 22 is connected to the plurality of rear transverse beams 13. The plurality of rear transverse beams 13 can better support the second rail member 22 by connecting the second rail member 22 to the plurality of rear transverse beams 13. Moreover, in a case where the second rail member 22 receives a collision force, the collision force may be transmitted and dispersed to the plurality of rear transverse beams 13, such that the structural strength can be improved, and the rear collision performance of the vehicle can be improved.

Optionally, the second rail member 22 extends in the front-rear direction of the vehicle. In the front-rear direction of the vehicle, a tail end of the second rail member 22 does not extend beyond a tail end of the rear transverse beam 13 near a rear end of the vehicle.

Optionally, four rear transverse beams 13 are provided. The rear transverse beam 13, the first rail member 21, the rear longitudinal beam 11 and the second rail member 22 together form a vehicle body structure in a "3x3" grid pattern to improve torsional strength of the vehicle. It can be understood that the grid-like structure has high stability and strong support. Thus, the structural strength of the entire rear floor of the vehicle can be improved, and the rear collision performance of the vehicle can be increased. Moreover, the rear anti-collision beam 15, the rear longitudinal beam 11 and the rear transverse beam 13 form a rear independent grid of the vehicle. The independent grid and the "3x3" grid can form a ten-cell grid structure together, further improving the rear collision performance. In other words, three larger grids and a rear independent grid are sequentially arranged in the front-rear direction of the vehicle. The three larger grids are each provided with three smaller grids in the width direction of the vehicle.

Optionally, in an implementation of the present invention, a first reinforcing member 12 is arranged on the rear longitudinal beam 11. A joint between the first rail member 21 and the rear longitudinal beam 11 is provided as a first connecting point 23. The first connecting point 23 is located above the first reinforcing member 12 in the height direction of the vehicle. The first connecting point 23 is connected to the first reinforcing member 12. The first reinforcing member 12 can improve the structural strength of the rear longitudinal beam 11, and moreover, the first reinforcing member 12 can reinforce the structural strength of a position of the first connecting point 23, such that connection strength between the first rail member 21 and the rear longitudinal beam 11 is improved. Thus, the first rail member 21 and the rear longitudinal beam 11 are combined together to be stressed together.

Optionally, in an implementation of the present invention, the rear subframe 3 is provided with a connecting member 31. The connecting member 31 is connected to the rear longitudinal beam 11. A joint between the first rail member 21 and the rear longitudinal beam 11 is a first connecting point 23. The connecting member 31 is located below the first connecting point 23 in the height direction of the vehicle.

The connecting member 31 is connected to the rear longitudinal beam 11, such that the rear subframe 3 is connected to the rear longitudinal beam 11. By arranging the connecting member 31 below the first connecting point 23, mutual structural reinforcement can be generated at the joint of the first rail member 21 and the rear subframe 3 to the rear longitudinal beam 11. Thus, connection strength of the first rail member 21 and the rear subframe 3 to the rear longitudinal beam 11 can be improved. Moreover, integrity can be improved. Furthermore, the assembly operation can be facilitated. The rear subframe 3 and the first rail member 21 can be connected to the rear longitudinal beam 11 through one assembly operation. Without a plurality of assembly operations, assembly efficiency is improved, a probability of abnormal noise can also be reduced, and noise vibration and harshness (NVH) performance can be guaranteed.

Optionally, in some examples, the first connecting point 23 may be located directly above the connecting member 31, that is, the first connecting point 23 and the connecting member 31 may at least partially overlap in the height direction of the vehicle. Thus, connecting positions of the first rail member 21 and the rear subframe 3 to the rear longitudinal beam 11 are in the same area in the height direction of the vehicle. Connection dynamic stiffness of the first rail member 21, the rear subframe 3 and the rear longitudinal beam 11 can be greatly improved. Then the connection stability can be greatly improved, and the probability of abnormal noise can be reduced. In other examples, the first connecting point 23 may be located obliquely above the connecting member 31, that is, the first connecting point 23 and the connecting member 31 do not overlap in the height direction of the vehicle, but are close to each other. In this way, connection of the first rail member 21 and the rear subframe 3 to the rear longitudinal beam 11 may also be facilitated separately.

Optionally, in an implementation of the present invention, a first reinforcing member 12 is arranged on the rear longitudinal beam 11. The seat rail 2 and the rear subframe 3 are connected to the first reinforcing member 12. The first reinforcing member 12 is located between the seat rail 2 and the rear subframe 3 in the height direction of the vehicle. Thus, the seat rail 2, the first reinforcing member 12 and the rear subframe 3 are stacked vertically. By such an arrangement, the first reinforcing member 12 can improve the structural strength of the rear longitudinal beam 11, improve the structural strength of the rear longitudinal beam 11, and further facilitate improvement in connection strength of the first rail member 21 and the rear subframe 3 to the rear longitudinal beam 11.

Optionally, in an implementation of the present invention, the first reinforcing member 12 is provided with a first connecting portion and a second connecting portion. The first rail member 21 is provided with a third connecting portion. The rear subframe 3 is provided with a fourth connecting portion. The first connecting portion is connected to the third connecting portion. The second connecting portion is connected to the fourth connecting portion.

The first connecting portion and the third connecting portion correspond to each other and can be connected to each other, such that assembly convenience of the first rail member 21 and the first reinforcing member 12 can be improved. The second connecting portion and the fourth connecting portion correspond to each other, and can be connected to each other, such that assembly convenience of the rear subframe 3 and the first reinforcing member 12 can be improved. Thus, assembly efficiency of the first rail member 21 and the rear subframe 3 to the first reinforcing member 12 can be greatly improved separately.

In order to further improve assembly connection convenience and guarantee the connection strength, optionally, in an implementation of the present invention, the first connecting portion is a first connecting hole 125, and the third connecting portion is a second connecting hole. The first connecting hole 125 and the second connecting hole are in communication. The fastener 70 includes a first fastener 50. The first fastener 50 is a first connecting bolt 5. The first connecting hole 125 is connected to the second connecting hole through the first connecting bolt 5. Axis of the first connecting hole 125, the second connecting hole and the first connecting bolt 5 are all arranged in the same direction. The axis of the first connecting hole 125, the second connecting hole and the first connecting bolt 5 are coaxial and provided as a first axis. The first axis is arranged in a first direction.

In a case where the first rail member 21 and the first reinforcing member 12 need to be connected together, the first connecting hole 125 and the second connecting hole are aligned and are in communication. The first connecting bolt 5 passes through the first connecting hole 125 and the second connecting hole to implement connection and fixation. The axis of the first connecting hole 125, the second connecting hole and the first connecting bolt 5 are all arranged in the same direction, such that the first connecting bolt 5 can be inserted into the first connecting hole 125 and the second connecting hole, and the first rail member 21 and the first reinforcing member 12 can be fitted together and fixed. The axis of the first connecting hole 125, the second connecting hole and the first connecting bolt 5 may be coaxial or not. In some examples, the axis of the first connecting hole 125, the second connecting hole, and the first connecting bolt 5 are all arranged in the height direction of the vehicle.

Optionally, in another implementation of the present invention, one of the first connecting portion and the third connecting portion is a first bump. The other of the first connecting portion and the third connecting portion is a first groove. The first bump is clamped into the first groove and fixed by welding. In this way, positioning and assembly fixation can be achieved.

In order to further improve the assembly connection convenience and guarantee the connection strength, optionally, in an implementation of the present invention, the second connecting portion is a threaded sleeve 126, and the fourth connecting portion is a bushing 34. The fastener 70 includes a second fastener 60. The second fastener 60 is a second connecting bolt 6. The threaded sleeve 126 and the bushing 34 are connected together through the second connecting bolt 6. The rear longitudinal beam 11 is provided with a third connecting hole 112. The third connecting hole 112 is configured to allow the second connecting bolt 6 to pass through. Axis of the threaded sleeve 126, the bushing 34 and the second connecting bolt 6 are all arranged in the same direction. The axis of the threaded sleeve 126, the bushing 34 and the second connecting bolt 6 are coaxial and provided as a second axis. The second axis extends in a second direction.

When the rear subframe 3 and the first reinforcing member 12 need to be connected, the threaded sleeve 126 and the bushing 34 are aligned and are in communication. The second connecting bolt 6 passes through the threaded sleeve 126 and the bushing 34, such that connection fixation is implemented. Furthermore, the second connecting bolt 6 also passes through the third connecting hole 112 on the rear longitudinal beam 11. Thus, connection between the first reinforcing member 12 and the rear longitudinal beam 11 can also be implemented through the second connecting bolt 6. A structure is simplified and a weight is reduced. The axis of the threaded sleeve 126, the bushing 34 and the second connecting bolt 6 are all arranged in the same direction, such that the second connecting bolt 6 can be guaranteed to be inserted into the threaded sleeve 126 and the bushing 34, and the rear subframe 3 and the first reinforcing member 12 are fitted together and fixed. Moreover, an axis of the third connecting hole 112 and the axis of the second connecting bolt 6 are also arranged in the same direction. Thus, the first reinforcing member 12 and the rear longitudinal beam 11 are also fitted together for connection fixation. The axis of the threaded sleeve 126, the bushing 34, the third connecting hole 112 and the second connecting bolt 6 may be coaxial or not. In some examples, the axis of the threaded sleeve 126, the bushing 34, the third connecting hole 112 and the second connecting bolt 6 are all arranged in the height direction of the vehicle.

Optionally, in another implementation of the present invention, one of the second connecting portion and the fourth connecting portion is provided as a second bump. The other of the second connecting portion and the fourth connecting portion is provided as a second groove. The second bump is clamped into the second groove and fixed by welding. In this way, positioning and assembly fixation can be achieved.

Optionally, an axis of the first fastener 50 and an axis of the second fastener 60 extend in the height direction of the vehicle. The axis of the first fastener 50 coincides with or deviates from the axis of the second fastener 60. It can be understood that the first axis and the second axis extend in the height direction of the vehicle and may overlap or deviate. The first axis and the second axis overlap, that is, the first axis and the second axis are one straight line. The first axis and the second axis deviate, that is, the first axis and the second axis are two parallel straight lines.

Optionally, in an implementation of the present invention, the first connecting hole 125 is located at a top of the first reinforcing member 12. The threaded sleeve 126 is located at one side of the first reinforcing member 12. By such an arrangement, positions of the first rail member 21 and the rear subframe 3 may be adapted. Connection of the first rail member 21 and the rear subframe 3 to the first reinforcing member 12 can be facilitated. Interference between the first rail member 21 and the rear subframe 3 can be avoided.

The first connecting hole 125 is located at the top of the first reinforcing member 12 in the height direction of the vehicle. The threaded sleeve 126 is located at one side of the first reinforcing member 12 in a horizontal direction of the vehicle.

Optionally, in an implementation of the present invention, the first reinforcing member 12 is provided with a mounting groove 127. The threaded sleeve 126 is connected to the mounting groove 127. The first reinforcing member 12 is provided with a first flange 122. The first connecting hole 125 is located at the first flange 122. The first flange 122 facilitates an arrangement of the first connecting hole 125. The mounting groove 127 may fix the threaded sleeve 126. The mounting groove 127 may accommodate the threaded sleeve 126.

The first connecting portion is the first connecting hole 125. The first connecting hole 125 is formed in the first flange 122. The first rail member 21 is fitted to the first flange 122. The second connecting hole and the first connecting hole 125 are aligned and are in communication. The second connecting portion is the threaded sleeve 126. The mounting groove 127 may be formed in the first reinforcing member 12 and may clamp and accommodate the threaded sleeve 126, to avoid occupying too much space. The threaded sleeve 126 may be welded to the mounting groove 127. The threaded sleeve 126 and the first reinforcing member 12 form an integral component, which is convenient for subsequent assembly operations.

Optionally, in an implementation of the present invention, the first reinforcing member 12 includes a support plate 121, a second flange 123 and a third flange 124. The second flange 123 is connected to a bottom of the support plate 121. The third flange 124 is connected to a side edge of the support plate 121. The second flange 123 and the third flange 124 are connected to the rear longitudinal beam 11.

The support plate 121 serves as a main structure and provides support, thus improving the structural strength of the rear longitudinal beam 11. The second flange 123 and the third flange 124 are connected to the rear longitudinal beam 11 separately, thus expanding a connecting area and increasing the connection strength. In some examples, the second flange 123 and the third flange 124 may be formed by bending the support plate 121. The second flange 123 and the third flange 124 are in surface-to-surface connection to the rear longitudinal beam 11 separately. The mounting groove 127 is located on one side of the support plate 121.

Optionally, in an implementation of the present invention, the rear longitudinal beam 11 is provided with a groove 111. The first reinforcing member 12 is located in the groove 111. The second flange 123 is connected to a groove bottom of the groove 111. The third flange 124 is connected to a groove wall of the groove 111.

The groove 111 is configured to accommodate the first reinforcing member 12. Thus, the first reinforcing member 12 is located in the rear longitudinal beam 11, without occupying too much space and increasing a size of the rear longitudinal beam 11, and further improves the structural strength of the rear longitudinal beam 11. In some examples, the second flange 123 may be welded to the groove bottom of the groove 111. The third flange 124 may be welded to the groove wall of the groove 111.

Optionally, in an implementation of the present invention, the rear floor structure of a vehicle further includes a fuel tank 4. The fuel tank 4 is connected to the frame 1. The fuel tank 4 is located in front of the rear subframe 3 in the front-rear direction of the vehicle. By such an arrangement, the fuel tank 4 can be protected. The fuel tank 4 is prevented from being damaged in an event of a rear collision of the vehicle.

A second aspect of the present invention further provides a vehicle. The vehicle includes the above rear floor structure of a vehicle.

Optionally, in an implementation of the present invention, the vehicle further includes a battery pack 7. The battery pack 7 is connected to a portion of the frame 1 of the rear floor structure of a vehicle. The battery pack 7 is located in front of the fuel tank 4. Since the structural strength of the rear floor structure of a vehicle is high, a rear collision intrusion is reduced, which can prevent the fuel tank 4 and the battery pack 7 from being damaged.

## Claims

1. A rear floor structure of a vehicle, comprising:
a frame (1), comprising a rear longitudinal beam (11); and
a seat rail (2), comprising a first rail member (21), the first rail member (21) is connected to a top of the rear longitudinal beam (11),
wherein both the first rail member (21) and the rear longitudinal beam (11) extend in a front-rear direction of the vehicle, a projection of the first rail member (21) in a height direction of the vehicle at least partially overlaps a projection of the rear longitudinal beam (11) in the height direction of the vehicle, and the first rail member (21) is connected to the rear longitudinal beam (11) through a fastener (70), to strengthen the rear longitudinal beam (11) to resist a rear collision load.

2. The rear floor structure of a vehicle according to claim 1, further comprising a rear subframe (3), wherein in the height direction of the vehicle, the rear subframe (3) is below the frame (1), and the seat rail (2) is above the frame (1); and
in the front-rear direction of the vehicle, a tail end of the rear longitudinal beam (11) extends beyond a tail end of the first rail member (21), and a tail end of the first rail member (21) extends beyond a tail end of the rear subframe (3).

3. The rear floor structure of a vehicle according to claim 2, wherein a first reinforcing member (12) is arranged on the rear longitudinal beam (11), both the first rail member (21) and the rear subframe (3) are connected to the first reinforcing member (12), and the first reinforcing member (12) is between the first rail member (21) and the rear subframe (3) in the height direction of the vehicle.

4. The rear floor structure of a vehicle according to claim 3, wherein the fastener (70) comprises a first fastener (50) and a second fastener (60);
a top of the first reinforcing member (12) is provided with a first connecting hole (125), and the first rail member (21) is connected to the first connecting hole (125) through the first fastener (50); and
a mounting groove (127) extending in the height direction of the vehicle is provided in a side wall of the first reinforcing member (12), a threaded sleeve (126) is fixedly arranged in the mounting groove (127), and the rear subframe (3) is connected to the threaded sleeve (126) through the second fastener (60);
optionally, an axis of the first fastener (50) and an axis of the second fastener (60) extend in the height direction of the vehicle, and the axis of the first fastener (50) coincides with or deviates from the axis of the second fastener (60).

5. The rear floor structure of a vehicle according to any one of claims 2 to 4, further comprising a fuel tank (4), wherein the fuel tank (4) is connected to the frame (1), and the fuel tank (4) is in front of the rear subframe (3) in the front-rear direction of the vehicle.

6. The rear floor structure of a vehicle according to any one of claims 1 to 5, wherein the frame (1) further comprises a rear transverse beam (13), two rear longitudinal beams (11) are provided, the two rear longitudinal beams (11) are spaced and arranged in parallel, and two ends of the rear transverse beam (13) are connected to the two rear longitudinal beams (11) respectively; and
the seat rail (2) further comprises a second rail member (22), the second rail member (22) is connected to the rear transverse beam (13), and the rear transverse beam (13) extends in a width direction of the vehicle.

7. The rear floor structure of a vehicle according to claim 6, wherein the second rail member (22) extends in the front-rear direction of the vehicle, and the first rail member (21) and the second rail member (22) are spaced and arranged in parallel in the width direction of the vehicle; and
in the front-rear direction of the vehicle, a length of the first rail member (21) is greater than a length of the second rail member (22).

8. The rear floor structure of a vehicle according to claim 6 or 7, wherein two first rail members (21) are provided, and the first rail member (21) corresponds to the rear longitudinal beam (11) one by one; and
two second rail members (22) are provided, the two second rail members (22) are spaced and arranged in parallel, the two second rail members (22) are located between the two first rail members (21) in the width direction of the vehicle, a plurality of rear transverse beams (13) are provided, and the first rail member (21), the second rail member (22) and the rear transverse beam (13) form a grid-like structure.

9. The rear floor structure of a vehicle according to any one of claims 6 to 8, wherein a joint between the second rail member (22) and the rear transverse beam (13) is a second connecting point (24), a second reinforcing member (80) is arranged on the rear transverse beam (13), and the second connecting point (24) is connected to the second reinforcing member (80).

10. The rear floor structure of a vehicle according to any one of claims 6 to 9, wherein a joint between the first rail member (21) and the rear longitudinal beam (11) is a first connecting point (23), and a joint between the second rail member (22) and the rear transverse beam (13) is a second connecting point (24); and
a plurality of first connecting points (23) and a plurality of second connecting points (24) are provided, the plurality of first connecting points (23) are spaced in the front-rear direction of the vehicle, and the plurality of second connecting points (24) are spaced in the width direction of the vehicle.

11. The rear floor structure of a vehicle according to any one of claims 6 to 10, wherein four rear transverse beams (13) are provided, and the rear transverse beam (13), the first rail member (21), the rear longitudinal beam (11) and the second rail member (22) together form a vehicle body structure in a "3x3" grid pattern to improve torsional strength of the vehicle.

12. The rear floor structure of a vehicle according to claim 11, wherein the second rail member (22) extends in the front-rear direction of the vehicle, and in the front-rear direction of the vehicle, a tail end of each second rail member (22) does not extend beyond a tail end of the rear transverse beam (13) near a rear end of the vehicle.

13. The rear floor structure of a vehicle according to any one of claims 6 to 12, wherein the frame (1) further comprises a rear anti-collision beam (15), the rear anti-collision beam (15) is connected to rear ends of the rear longitudinal beam (11) in the front-rear direction of the vehicle, and the rear anti-collision beam (15), the rear longitudinal beam (11) and the rear transverse beam (13) form a rear independent grid of the vehicle.

14. A vehicle, comprising the rear floor structure of a vehicle according to any one of claims 1 to 13.

15. The vehicle according to claim 14, further comprising a battery pack (7) connected to a portion of a frame (1) of the rear floor structure of a vehicle.
